# FASCICULE DE BREVET EUROPEEN

(11) **EP 1 261 473 B1**
(45) Date de publication et mention de la délivrance du brevet: **03.08.2005**
(21) Numéro de dépôt: 01923586.0
(22) Date de dépôt: 16.02.2001
(51) Int. Cl.: B29C 69/00, B29C 51/10, B29L 22/00

(54) **PROCEDE DE FABRICATION DE RESERVOIR A CARBURANT EN MATIERE PLASTIQUE**
VERFAHREN ZUR HERSTELLUNG EINES KUNSTSTOFF-KRAFTSTOFFTANKS
METHOD FOR MAKING A FUEL TANK IN PLASTIC MATERIAL

(30) Priorité: 18.02.2000 BE 200000130
(43) Date de publication de la demande: 04.12.2002
(73) Titulaire: Inergy Automotive Systems Research (Société Anonyme), 1120 Bruxelles (BE)
(72) Inventeur: VAN SCHAFTINGEN, Jules-Joseph, B-1300 Wavre (BE); GERARD, Yannick, B-1950 Kraainem (BE); DUPONT, Serge, B-1800 Vilvoorde (BE); LEONARD, Stephane, B-1070 Bruxelles (BE)
(74) Mandataire: Decamps, Alain René François
(86) Numéro de dépôt international: PCT/EP2001/001804
(87) Numéro de publication internationale: WO 2001/060592

(56) Documents cités:
- EP-A- 1 110 697
- DE-A- 1 801 966
- FR-A- 1 541 652
- US-A- 3 767 740
- US-A- 5 129 544
- PATENT ABSTRACTS OF JAPAN vol. 017, no. 679 (M-1527), 14 December 1993 (1993-12-14) & JP 05 229015 A (TOYOTA MOTOR CORP), 7 September 1993 (1993-09-07)
- PATENT ABSTRACTS OF JAPAN vol. 1999, no. 14, 22 December 1999 (1999-12-22) & JP 11 254511 A (CANON INC), 21 September 1999 (1999-09-21)

## Description

La présente invention concerne un procédé de fabrication de réservoir à carburant en matière plastique.

Les réservoirs à carburant embarqués dans les véhicules de nature diverse doivent généralement satisfaire à des normes d'étanchéité et de perméabilité en rapport avec le type d'usage pour lequel ils sont conçus et les exigences en matière d'environnement qu'ils doivent respecter. On assiste actuellement, tant en Europe que dans le monde à un renforcement considérable des exigences concernant la limitation des émissions de polluants dans l'atmosphère et la nature en général. La conception de réservoirs à carburant évolue en conséquence rapidement vers des techniques capables de mieux garantir l'étanchéité et la sécurité sous des conditions variées d'utilisation. Par ailleurs, on s'est aussi efforcé de réduire au maximum les pertes ayant pour origine les canalisations et accessoires divers liés aux réservoirs. Un moyen parfois utilisé a été d'incorporer certains accessoires et canalisations à l'intérieur des réservoirs, éliminant ainsi leur interface avec l'atmosphère extérieure.

La demande de brevet GB-1136613 divulgue un procédé de moulage d'articles à partir d'une feuille en résine thermoplastique comprenant l'extrusion de la feuille suivie de son moulage dans un moule en deux parties dont les contours périphériques peuvent presser les parties périphériques de la feuille, réalisant un joint capable de maintenir une différence de pression de part et d'autre de la feuille de manière à mettre en forme la partie centrale.

Ce procédé connu est toutefois appliqué à la fabrication d'objets ouverts présentant un bord plat à leur périphérie, creusé éventuellement d'un sillon. Les objets, d'assez petite taille, conviennent comme récipients. Ils sont fabriqués avec des pressions de soufflage d'au plus 10 kg/cm2. Aucun dispositif ni accessoire n'est de plus introduit avant moulage et ne se retrouve dans les objets obtenus.

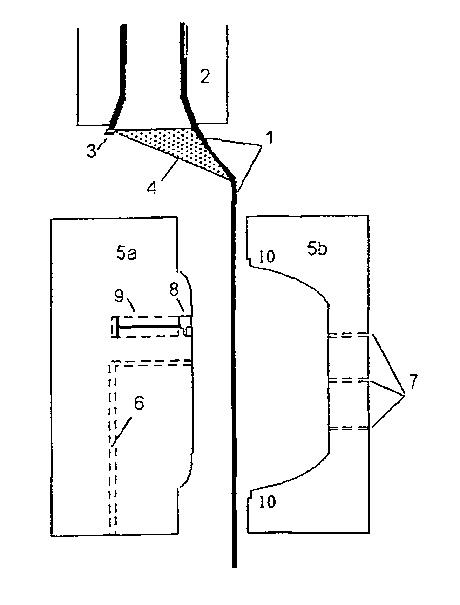

On connait le brevet US-5,129,544 qui divulgue un réservoir à carburant en matière plastique comprenant deux coquilles creuses en matériau multicouche assemblées de manière étanche sur la totalité de leur périmètre, par solidarisation de leur rebord périphérique plan (figure 2a). Dans ce réservoir, les coquilles peuvent être formées par estampage (col.4, lignes 60 à 64) ou par formage sous vide (col.4, lignes 64 à 66).

La demande de brevet allemand DE-0S-1 801 966 décrit la fabrication de corps creux en matériau thermoplastique à partir de deux coquilles (17') formées par moulage, que l'on assemble par soudage au miroir (20). Le moulage de chacune des coquilles (17') est réalisé par compression (21) d'une partie d'une feuille (17) en matériau thermoplastique et par soufflage (18) de la partie restante de la feuille (17), dans la zone non comprimée.

L'invention a pour but de fournir un procédé qui permette la réalisation d'un réservoir à carburant en matière plastique avec un excellent contrôle de la reproductibilité et de la précision des dimensions, qui puisse atteindre un volume important, jusqu'à environ 100 à 150 litres et qui soit bien adapté à l'incorporation d'accessoires avant la phase de moulage.

A cet effet, l'invention concerne un procédé de fabrication selon la revendication 1.

Par réservoir à carburant, on entend désigner un réservoir étanche, apte à stocker du carburant dans des conditions d'utilisation et d'environnement diverses et variées. Un exemple de ce réservoir est celui qui équipe les véhicules automobiles.

Le réservoir à carburant produit selon le procédé conforme à l'invention est réalisé en matière plastique, c'est-à-dire en matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.*

Un polymère souvent employé est le polyéthylène. D'excellents résultats ont été obtenus avec du polyéthylène haute densité (PEHD).

Selon l'invention, le réservoir est fabriqué à partir de deux coquilles. Par coquille on désigne une enveloppe partielle non fermée se présentant sous la forme d'un corps creux ouvert, en forme de surface présentant au moins une partie concave.

Les deux coquilles sont assemblées pour obtenir le réservoir. Tout type d'assemblage étanche convient. On préfère cependant réaliser l'assemblage des coquilles par soudage.

Chaque coquille utilisée a été formée par moulage d'une feuille en matière plastique. Une feuille destinée au moulage peut être constituée d'une seule composition de matière plastique. Elle peut aussi se présenter sous la forme d'une structure résultant de l'empilage de plusieurs couches de compositions de matière plastique différentes. Une couche souvent utilisée avec avantage dans une telle structure est une couche comprenant au moins un matériau barrière aux liquides et aux gaz, en particulier aux hydrocarbures.

Selon l'invention, le moulage d'au moins une coquille comprend la compression d'une partie de la feuille et le soufflage de la partie non comprimée. Ces deux opérations s'effectuent dans un même moule.

La compression est réalisée par rapprochement et serrage, de part et d'autre de la feuille, d'au moins une zone d'une partie de moule et d'un poinçon qui est solidaire de l'autre partie de moule.

Le soufflage est réalisé par introduction, d'un côté de la feuille, dans la région non comprimée, d'un fluide sous pression. Ce fluide peut être un gaz, un liquide ou une dispersion d'au moins un liquide dans un gaz. Lorsque le fluide comprend un liquide, il assure avantageusement un meilleur transfert thermique entre la feuille et le fluide. De préférence, on introduit le fluide sous pression du côté de la feuille où se situe le poinçon. A titre de fluide sous pression, l'air comprimé a donné de bons résultats. On peut aussi utiliser un fluide de balayage sous pression comprenant un gaz réactif. Un tel gaz réactif peut être du fluor. On peut aussi utiliser un gaz inerte, tel que de l'azote. Un mélange de différents gaz peut aussi être utilisé, en particulier un mélange contenant au moins deux des gaz cités plus haut. Parmi les liquides, on peut avantageusement utiliser l'eau. Un fluide ayant particulièrement conduit à d'excellents résultats est une dispersion (un "spray") d'eau dans l'air comprimé.

Le moulage conforme au procédé selon l'invention est bien adapté au traitement d'une feuille disposée verticalement. Un exemple est celui d'une feuille qui est produite par extrusion, dans une machine d'extrusion disposée verticalement, la tête d'extrusion comprenant la filière étant située au point le plus bas et la feuille produite s'écoulant de manière rectiligne, sous l'influence de son propre poids.

Selon l'invention, la feuille est obtenue dans la même ligne de fabrication que la coquille qui sera produite à partir de cette feuille, par découpe et ouverture d'une paraison extrudée de section fermée.Une des coquilles peut avoir été fabriquée au préalable, de manière indépendante, dans une autre unité de fabrication que le réservoir. Par exemple, la coquille peut avoir été fabriquée dans une installation de moulage différente de celle utilisée pour fabriquer le réservoir.

Au moins une des coquilles utilisées est cependant moulée de préférence dans la même unité de fabrication que le réservoir. Cette coquille peut, par exemple être moulée dans une phase opératoire précédant immédiatement l'obtention du réservoir. Elle peut aussi être produite dans une phase opératoire qui est, en partie du moins, simultanée à l'obtention du réservoir. Les deux coquilles peuvent aussi être moulées dans la même unité de fabrication que le réservoir.

Conformément au procédé selon l'invention, on obtient avantageusement la feuille par découpe et ouverture d'une paraison de section fermée sortant de la filière montée sur la tête d'extrusion. L'opération de découpe consiste à percer et trancher sur la totalité de son épaisseur la paroi de la paraison selon une courbe de forme et de longueur prédéterminée. De préférence, la courbe de découpe est rectiligne. De préférence aussi, la découpe est réalisée en continu sur la totalité de la longueur de la paraison. De manière la plus préférée, on réalise la découpe en ligne droite sur la totalité de la longueur de la paraison.

L'ouverture de la paraison découpée peut se faire par tout moyen adapté. En particulier, on peut ouvrir la paraison découpée à l'aide de dispositifs de guidage. Des exemples de tels dispositifs sont, de manière non limitative : les galets et les rouleaux.

Selon une forme de réalisation particulièrement préférée du procédé conforme à l'invention, la partie de la feuille qui subit un moulage par compression comprend les zones d'assemblage des coquilles.

Par zones d'assemblage, on entend les parties de la coquille qui sont destinées à coopérer avec celle de l'autre coquille lors de l'assemblage afin de donner lieu à la création d'un réservoir étanche.

Lorsque l'assemblage est réalisé par soudage des deux coquilles, les zones d'assemblage comprennent les trottoirs de soudure.

Une forme particulière de réalisation du procédé selon l'invention consiste à comprimer et souffler les deux coquilles en même temps, grâce à l'emploi de moules doubles empilés, encore appelés moules "sandwich" ou "stack molds".

Selon une autre forme de réalisation particulièrement avantageuse du procédé selon l'invention, avant assemblage, on insère dans la coquille et on fixe sur celle-ci au moins un accessoire du réservoir à carburant.

Par accessoire on entend désigner tout objet ou dispositif généralement associé au réservoir à carburant dans son mode d'utilisation ou de fonctionnement habituel et qui coopère avec celui-ci pour assurer certaines fonctions utiles. Des exemples non limitatifs de tels accessoires sont: des pompes à liquide, des pipettes, des réservoirs ou baffles intérieurs au réservoir à carburant, des dispositifs de ventilation.

Tout mode de fixation de l'accessoire sur la coquille qui soit compatible avec l'utilisation du réservoir à carburant convient. Un mode de fixation qui a donné de bons résultats est le soudage.

Alternativement, l'accessoire peut, lors du moulage de la coquille, être moulé simultanément à cette dernière, à l'intervention d'au moins un dispositif particulier.

Une technique intéressante pour effectuer ce moulage simultané de l'accessoire et de la coquille est d'opérer par fluage de la feuille servant à fabriquer la coquille, tout au moins dans une zone localisée de cette feuille.

Un autre mode de fixation d'accessoire dans le procédé conforme à l'invention comprend l'utilisation d'un dispositif additionnel de surmoulage de la coquille qui permet le moulage et la fixation directe d'au moins un accessoire du réservoir à carburant par adjonction de matière d'un côté de la paroi de la coquille. La matière préférée est une matière plastique ou une matière composite à base de matière plastique. Une matière plastique identique à celle de la feuille a donné de bons résultats.

Le surmoulage peut, de cette façon, être réalisé sur le côté intérieur (concave) de la coquille. Il peut aussi être réalisé sur le côté extérieur (convexe). De préférence, cette technique est utilisée pour mouler et fixer un accessoire du côté intérieur (concave) de la coquille, en raison de l'incorporation ultérieure au moulage des coquilles de l'accessoire ainsi réalisé à l'intérieur du réservoir.

Selon cette dernière technique particulière, l'adjonction de matière peut se faire par injection d'une composition de matière plastique

On peut aussi combiner la fixation d'au moins un accessoire par fluage de la feuille comme décrit plus haut avec celle d'au moins un accessoire supplémentaire par surmoulage côté intérieur.

Une autre méthode pour fixer un accessoire à l'intérieur de la coquille comprend l'utilisation d'au moins un dispositif placé du côté poinçon ou du côté matrice du moule, capable de fixer au moins un accessoire du réservoir à carburant par soudage de ce dernier sur la feuille. Une technique de fixation alternative consiste à enrober, au moins partiellement, l'accessoire avec une partie de la feuille. De préférence, on utilise au moins deux dispositifs.

Le côté matrice est celui qui correspond dans le moule au côté extérieur de la coquille et du réservoir. De préférence, on utilise deux dispositifs placés du côté poinçon, afin de fixer un accessoire du côté intérieur à la coquille et au réservoir.

On peut encore combiner ce dernier mode de fixation d'un accessoire avec un ou plusieurs des autres modes décrits plus haut.

Selon une forme intéressante de réalisation particulière du procédé conforme à l'invention, on insère lors du moulage une structure préassemblée permettant la rigidification du réservoir par appui sur chacune des deux coquilles simultanément et/ou la fixation d'au moins un accessoire du réservoir.

La structure préassemblée est constituée d'une composition de matière ou d'une matière compatible avec le réservoir. De préférence, elle comprend une matière plastique de même nature que celle de la paroi interne du réservoir. La structure préassemblée peut réunir plusieurs accessoires identiques ou différents via tout moyen de solidarisation adéquat. Des exemples de ces moyens sont le clipsage, le serrage par vissage, le soudage, ...Il est aussi avantageux que la structure préassemblée porte des moyens qui permettent la réunion d'accessoires supplémentaires qui seraient éventuellement fixés ultérieurement. Ces moyens sont aussi des dispositifs de clipsage, des trous taraudés ou des protubérances filetées de forme circulaire permettant le vissage, des zones de surface aptes au soudage,...

L'insertion d'une structure préassemblée peut se combiner avec un ou plusieurs des modes de fixation d'accessoires déjà décrits *supra*.

Il est particulièrement avantageux que la structure préassemblée porte elle aussi au moins un accessoire du réservoir à carburant.

Après l'opération d'assemblage des deux coquilles, le réservoir peut subir tout type de traitement de surface. Un exemple de traitement est celui qui consister à effectuer une fluoration du réservoir. On peut ainsi traiter la surface interne du réservoir ou sa surface externe ou encore traiter les deux surfaces simultanément.

Après l'opération de moulage, la coquille subit avantageusement un ébarbage de la matière, par exemple des cordons de soudure, dans les zones qui ont été soumises à compression. Cette opération se fait généralement avec un couteau profilé adapté aux dimensions externes du réservoir.

Selon l'invention, il est intéressant, afin d'améliorer la précision des cotes dimensionnelles des coquilles, d'appliquer ensuite un gabarit de conformation autour de celles-ci et de le laisser en contact avec au moins une partie des zones de ces coquilles, pendant le temps nécessaire au refroidissement de celles-ci. Cette technique est particulièrement intéressante dans le cas du contact du gabarit avec les zones d'assemblage des coquilles.

La figure qui suit est donnée dans le but d'illustrer une réalisation concrète de l'invention, sans vouloir aucunement en restreindre sa portée. Elle représente une installation d'extrusion-soufflage à extrusion continue utilisée pour produire des réservoirs à essence pour automobile. L'extrudat multicouche (1) comprend 5 couches PEHD / adhésif / barrière / adhésif / PEHD. L'adhésif est du polyéthylène greffé à l'anhydride maléique. L'extrudat tubulaire (1) sortant de la filière de forme circulaire qui est montée sur la tête d'extrusion (2) est découpé le long d'une génératrice à l'aide d'une lame (3) en acier placée à la sortie de la filière circulaire.

Après découpe, l'extrudat (1) est déplié pour former une feuille (1) qui est guidée à l'aide d'un système de surfaces inclinées (4). Le moule (5) vient alors se placer en position ouverte sous la tête d'extrusion (2). Le moule (5) est ensuite refermé sur la feuille (1) provoquant sa compression dans une zone située entre le poinçon (5a) et la matrice (5b), au droit de l'assemblage des coquilles (10). La feuille (1) est ensuite plaquée contre la surface de la matrice (5b) sous l'impulsion de l'évacuation de l'air côté matrice au travers de lignes de ventilation (7) et de l'admission d'air sous pression côté poinçon, via une ligne de soufflage (6).

Une pipette (8), montée sur un vérin (9) a par ailleurs été plaquée sur le côté interne de la feuille (1), alors qu'elle se trouvait encore à l'état fondu, réalisant directement son soudage à cette paroi interne.

## Revendications

1. Procédé de fabrication de corps creux en matière plastique à partir de deux coquilles formées par moulage, que l'on assemble, le moulage d'au moins une coquille étant réalisé par compression d'une partie d'une feuille (1) en matière plastique entre un moule (5b) et un poinçon (5a) et par soufflage de la partie restante de la feuille, dans la zone non comprimée, **caractérisé en ce qu'**il est appliqué à la fabrication d'un réservoir à carburant et que la feuille (1) est obtenue dans la même ligne de fabrication que la coquille qui sera produite à partir de cette feuille (1), par découpe (3) et ouverture d'une paraison extrudée de section fermée (2).

2. Procédé selon la revendication précédente, **caractérisé en ce que** la partie de la feuille (1) moulée par compression comprend les zones (10) d'assemblage des coquilles.

3. Procédé selon une quelconque des revendications précédentes, **caractérisé en ce que** les deux coquilles sont comprimées et soufflées dans le même temps grâce à l'emploi de moules doubles empilés (moules "sandwich" ou "stack-molds").

4. Procédé selon une quelconque des revendications précédentes, **caractérisé en ce que**, avant assemblage, on insère dans et on fixe sur la coquille au moins un accessoire (8) du réservoir à carburant.

5. Procédé selon la revendication 4, **caractérisé en ce que**, lors de l'opération de moulage de la coquille, au moins un dispositif particulier permet le moulage simultané sur la coquille d'au moins un accessoire (8) du réservoir à carburant par fluage de la feuille.

6. Procédé selon la revendication 4 ou 5, **caractérisé en ce qu'**au moins un dispositif additionnel de surmoulage de la coquille permet le moulage et la fixation directe d'au moins un accessoire (8) du réservoir à carburant par adjonction de matière d'un côté de la paroi de la coquille.

7. Procédé selon la revendication précédente, **caractérisé en ce que** l'adjonction de matière se fait par injection d'une composition de matière plastique.

8. Procédé selon une quelconque des revendications 4 à 7, **caractérisé en ce qu'**au moins un dispositif placé du côté poinçon (5a) ou du côté matrice (5b) du moule permet la fixation, lors du moulage, d'au moins un accessoire (8) du réservoir à carburant par dépose et soudage de l'accessoire sur la feuille ou par enrobage partiel de l'accessoire avec une partie de la feuille.

9. Procédé selon une quelconque des revendications précédentes, **caractérisé en ce que** l'on insère lors du moulage une structure préassemblée permettant la rigidification du réservoir par appui sur chacune des deux coquilles simultanément et/ou la fixation d'au moins un accessoire (8) du réservoir.

10. Procédé selon une quelconque des revendications précédentes, **caractérisé en ce que**, après moulage de la coquille, on procède à l'ébarbage des cordons de soudure et on applique ensuite un gabarit de conformation qui est laissé en contact avec au moins une partie des zones des coquilles, pendant le temps nécessaire au refroidissement de celles-ci et à l'amélioration de la précision des cotes dimensionnelles des coquilles.

## Patentansprüche

1. Verfahren zur Herstellung eines Hohlkörpers aus Kunststoff aus zwei Schalen, die durch Formung ausgebildet und zusammengebaut werden, wobei die Formung zumindest einer Schale durch Pressen eines Teiles einer Folie (1) aus Kunststoff zwischen einer Form (5b) und einem Stempel (5a) und durch Aufblasen des verbleibenden Teiles der Folie in einer nicht zusammengepreßten Zone erfolgt; **dadurch gekennzeichnet, daß** dieses Verfahren zur Herstellung eines Kraftstoffbehälters angewendet wird und daß die Folie (1) in der gleichen Herstellungsstraße wie die Schale erhalten wird, die aus dieser Folie (1) durch Ausschneiden (3) und durch Öffnen (2) eines aus dem geschlossenen Abschnitt (2) extrudierten Rohlings hergestellt wird.

2. Verfahren nach Anspruch 1, **dadurch gekennzeichnet, daß** der Teil der Folie (1), der durch Pressung geformt wird, die Zonen (10) für den Zusammenbau der Schalen enthält.

3. Verfahren nach einem der vorhergehenden Ansprüche, **dadurch gekennzeichnet, daß** die beiden Schalen durch Anwendung von gestapelten Doppelformen ("Sandwich"- oder "Stapelformen") zusammengepreßt und gleichzeitig aufgeblasen werden.

4. Verfahren nach einem der vorhergehenden Ansprüche, **dadurch gekennzeichnet, daß** vor dem Zusammenbau in die Schale zumindest ein Accessoire (8) des Kraftstoffbehälters eingebracht oder an der Schale fixiert wird.

5. Verfahren nach Anspruch 4, **dadurch gekennzeichnet, daß** beim Formüngsvorgang der Schale zumindest eine besondere Vorrichtung das gleichzeitige Anformen zumindest eines Accessoires (8) des Kraftstoffbehälters an der Schale durch Fließen der Folie bewirkt.

6. Verfahren nach Anspruch 4 oder 5, **dadurch gekennzeichnet, daß** zumindest eine zusätzliche Vorrichtung zur Überformung der Schale die Formung und das direkte Fixieren zumindest eines Accessoires (8) des Kraftstoffbehälters durch Anbringen des Materials an einer Seite der Wand der Schale gestattet.

7. Verfahren nach dem vorhergehenden Anspruch, **dadurch gekennzeichnet, daß** das Anbringen des Materials durch Spritzgießen einer Zusammensetzung aus Kunststoffmaterial vorgenommen wird.

8. Verfahren nach einem der Ansprüche 4 bis 7, **dadurch gekennzeichnet, daß** zumindest eine Vorrichtung, die auf der Seite des Stempels (5a) oder auf der Seite der Matrize (5b) der Form angeordnet ist, es gestattet, bei der Formung zumindest ein Accessoire (8) des Kraftstoffbehälters durch Ablegen und Anschweißen des Accessoires an der Folie oder durch teilweises Einhüllen des Accessoires mit einem Teil der Folie zu fixieren.

9. Verfahren nach einem der vorhergehenden Ansprüche, **dadurch gekennzeichnet, daß** man bei der Formung einen vorgefertigten Aufbau einsetzt, der eine Aussteifung des Behälters durch gleichzeitiges Abstützen an jeder der beiden Schalen und/oder Fixieren zumindest eines Accessoires (8) des Behälters gestattet.

10. Verfahren nach einem der vorhergehenden Ansprüche, **dadurch gekennzeichnet, daß** nach dem Formen der Schale die Schweißnähte entgratet werden und sodann eine Schrumpfvorrichtung angebracht wird, die mit zumindest einem Teil der Zonen der Schale während eines Zeitraumes in Kontakt gelassen wird, der für das Aushärten derselben und/oder die Verbesserung der Dimensionspräzision der Schalen notwendig ist.

## Claims

1. A process for manufacturing plastic hollow bodies from two shells formed by molding, which are joined together, at least one shell being produced by compression-molding a portion of a plastic sheet (1) between a mold (5b) and a punch (5a) and by the remaining portion of the sheet being blow-molded in the region not compression-molded, **characterized in that** it is applied to the manufacture of a fuel tank and **in that** the sheet (1) is obtained in the same manufacturing line as the shell which will be produced from this sheet (1), by cutting (3) and opening an extruded parison of closed cross section (2).

2. The process as claimed in the preceding claim, **characterized in that that** portion of the sheet (1) which undergoes compression-molding comprises the regions (10) for joining the shells together.

3. The process as claimed in any one of the preceding claims, **characterized in that** the two shells are compression-molded and blow-molded at the same time, by using stacked double molds (sandwich molds or stack molds).

4. The process as claimed in any one of the preceding claims, **characterized in that**, before joining, at least one accessory (8) of the fuel tank is inserted into the shell and fixed onto it.

5. The process as claimed in claim 4, **characterized in that**, during the operation of molding the shell, at least one particular device allows the simultaneous molding onto the shell of at least one fuel tank accessory (8) by flow of the sheet.

6. The process as claimed in claim 4 or 5, **characterized in that** at least one additional device for overmolding the shell allows at least one accessory (8) of the fuel tank to be molded and fixed directly by the addition of material on one side of the wall of the shell.

7. The process as claimed in the preceding claim, **characterized in that** the addition of material is performed by injection-molding a plastic composition.

8. The process as claimed in any one of claims 4 to 7, **characterized in that** at least one device placed on the punch side (5a) or on the die side (5b) of the mold makes it possible to fix, during molding, at least one fuel tank accessory (8) by depositing and welding the accessory to the sheet or by partially covering the accessory with a portion of the sheet.

9. The process as claimed in any one of the preceding claims, **characterized in that** a preassembled structure is inserted during molding, allowing the tank to be stiffened by simultaneously pressing on each of the two shells and/or fixing at least one accessory (8) of the tank.

10. The process as claimed in any one of the preceding claims, **characterized in that**, after the shell has been molded, the weld beads are deflashed and then a shaping template is applied, which is left in contact with at least one portion of the regions of the shells for the time needed to cool the latter and to improve the accuracy of the dimensions of the shells.
